# EUROPEAN PATENT APPLICATION

(11) **EP 1 973 106 A1**
(43) Date of publication of application: **24.09.2008**
(21) Application number: 06828364.7
(22) Date of filing: 18.12.2006
(51) Int. Cl.: G11B 5/54, G11B 21/12

(54) **RAMP IN HARD DISC**

(30) Priority: 29.12.2005 CN 200510121090
(71) Applicant: Shenzhen Excelstor Technology Ltd., Futian District Shenzhen Guangdong 518000 (CN)
(72) Inventor: XU, Mingkui, Shenzhen; Guangdong 518000 (CN)
(74) Representative: Ketelaars, Maarten F.J.M.
(86) International application number: PCT/CN2006/003451
(87) International publication number: WO 2007/073674

(57) **Abstract**

The present invention discloses a hard disk drive head loading and unloading device, including a working division and a positioning division. The working division and the positioning division are fixedly connected or integrated as a whole, the former being provided with a slide rail on which a magnetic head can move, the latter a structure for mounting and positioning. The positioning division has an underside and two side faces, the underside being flat, the side faces having positioning bulges protruding from their surfaces, respectively; and the underside and the positioning bulges constitute the positioning structure of the head loading and unloading device. The present invention has the following advantages: Positioning of the head loading and unloading device through a combination of face contact of the underside and point contact of the bulge on the side face can not only ensure the mounting stability, but also consumedly reduce the face positioning error; meanwhile, the bulge-type positioning structure feels better for an operator and makes it easy to judge whether the members are in place, thus guaranteeing improvement in positioning precision of the head loading and unloading device from structure.

## Description

### FIELD OF THE INVENTION

The present invention relates to a hard disk drive, and particularly to a hard disk drive head loading and unloading device.

### BACKGROUND OF THE INVENTION

A head loading and unloading device is an important member of a hard disk drive. It is positioned close to the cartridge and at the side of the disc. It provides a track for a read-and-write magnetic head to access the disc, and an accommodating space while the magnetic head moves out of the disc so as to protect the magnetic head. Because the fitted magnetic head assembly is very high in precision and very easy to be damaged, there is a very high requirement for the mounting and positioning precision of the head loading and unloading device. Generally speaking, the head loading and unloading device is irregular in shape and manufactured integrally. It can usually be divided according to function into two divisions, a working division and a positioning division, the former providing a slide rail where the magnetic head can move and stay, the latter a structure for mounting and positioning. The head loading and unloading device is usually positioned via the positioning division, with its several positioning faces closely jointed to each face of the mounting space of the baseplate. This structure has a very high requirement for leveling degree of the positioning face and the mounting face, because theoretically the requirement can be satisfied only when each point on the two faces is jointed. Besides, the head loading and unloading device has a small size, a dedicated fixture is needed for holding and mounting, and it is very difficult for an operator to judge by feeling the jointing degree of the two faces to mount the head loading and unloading device accurately in place. Therefore, there are difficulties with manufacturing and mounting the prior positioning structure of the positioning division.

### CONTENTS OF THE INVENTION

A purpose of the present invention is to provide a hard disk drive head loading and unloading device that is improved in positioning precision and easy to be manufactured and mounted, so as to overcome the above-mentioned disadvantages of the prior structure.

The technical solution of the present invention is as below in order to achieve the above-mentioned purpose: A hard disk drive head loading and unloading device is provided, including a working division and a positioning division; the working division and the positioning division are fixedly connected or integrated as a whole, the former being provided with a slide rail on which the magnetic head can move, the latter a structure for mounting and positioning; the positioning division has an underside and two side faces, the underside being flat, on both of the side faces being positioning bulges protruding from their surfaces, respectively; and the underside and the positioning bulges constitute the positioning structure of the head loading and unloading device.

Preferably, the center of gravity of the head loading and unloading device is within and perpendicular to the underside.

Preferably, the two side faces are perpendicular to the underside, one of them with a longer intersection line with the underside having two positioning bulges along the direction of the intersection line, the other one positioning bulge.

Further preferably, one of the two positioning bulges located on the same side face has a strip form, and extends along a direction perpendicular to the underside; and the other two positioning bulges have a lump form, whose dimensions are smaller than 1/3 of the length of the strip positioning bulge.

More preferably, the strip positioning bulge runs through the side face it belongs to along its length direction, whose width is smaller than 1/3 of its length.

Following beneficial technical effects can be obtained by the technical solution of the present invention: Positioning of the head loading and unloading device through combination of face contact of the underside and point contact of the bulge on the side face can not only ensure the mounting stability, but also consumedly reduce the face positioning error. Meanwhile, the bulge-type positioning structure feels better for an operator and makes it easy to judge whether the members are in place, thus guaranteeing improvement in positioning precision of the head loading and unloading device from structure. Furthermore, providing a strip-form bulge on the longer side face can not only guarantee the positioning precision, but also avoid unsteadiness from an inclined head loading and unloading device as far as possible during the mounting operation. Moreover, the design that the center of gravity of the head loading and unloading device is within and perpendicular to the underside makes the head loading and unloading device stably positioned on the face jointed to the underside by the weight of its own, thus improving the mounting stability. The head loading and unloading device positioning structure provided in the present invention, i.e. the combination of face (underside), line (convex strip) and point (convex block) positioning structures, is a preferred solution selected from a great deal of experiment, and can realize precise positioning and mounting of the head loading and unloading device by being fitted with the corresponding baseplate.

The present invention will be further described below in detail with reference to drawings and embodiments.

### BRIEF DESCRIPTION OF THE DRAWINGS

Figures 1(a) and 1(b) are stereoscopic drawings of a hard disk drive head loading and unloading device from different point of view.
Figures 2(a) and 2(b) are exterior stereoscopic drawings of a head loading and unloading device holding device from different point of view.
Figure 3 is a stereoscopic drawing where the head loading and unloading device is mounted to the holding device.
Figure 4 is a schematic drawing of a fixture of the hard disk drive.
Figure 5 is a structural schematic drawing of the hard disk drive baseplate.
Figure 6 is an operational schematic drawing where the head loading and unloading device is mounted onto the hard disk drive baseplate with the mounting fixture of the head loading and unloading device.

### DETAILED DESCRIPTION OF THE EMBODIMENTS

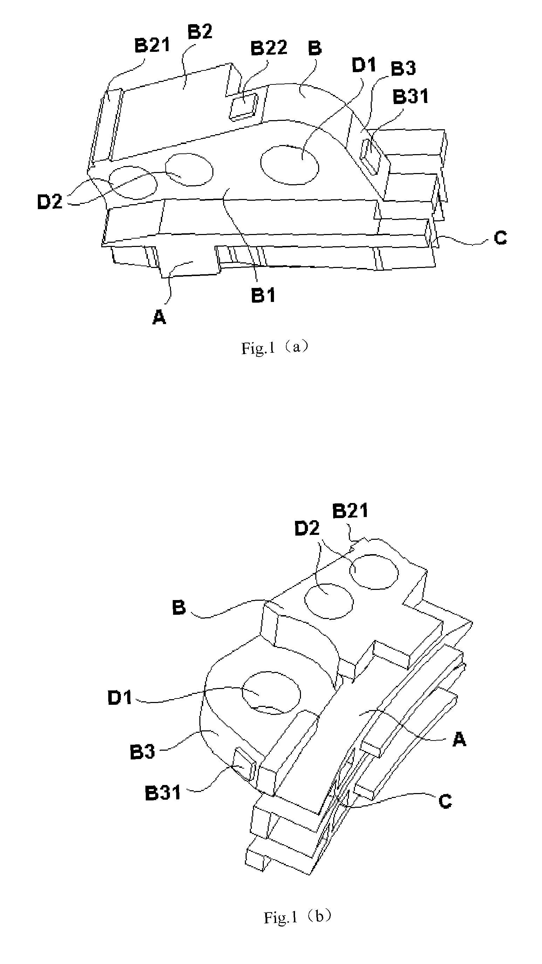

As shown in Figures 1(a) and 1(b), a hard disk drive head loading and unloading device is provided including a working division A and a positioning division B, which are integrated as a whole, the former having a slide rail C on which a magnetic head can move, the latter a structure for mounting and positioning.

The positioning structure of the positioning division B includes an underside B1 and two side faces B2 and B3. The underside B1 is flat, while the side faces B2 and B3 are perpendicular to the underside B1. The side face B2 intersects the underside B1 with a longer intersection line, while the side face B3 a shorter intersection line. On the side face B2 there are two positioning bulges, B21 and B22, which are positioned near both ends of the intersection line, respectively; and at the center of the side face B3 there is a positioning bulge B31. The bulge B21 has a strip form, extending along a direction perpendicular to the underside, having a width smaller than 1/3 of its length; and the bulges B22 and B31 have a lump form, whose dimensions are smaller than 1/3 of the length of the bulge B21.

The mounting structure of the positioning division B includes a screw hole D1 and two through holes D2s. The screw hole D1, used for fixing the head loading and unloading device on the baseplate, is perpendicular to the underside B1 and runs through the entire positioning division B; and the two through holes D2s are used for the fixture to hold the head loading and unloading device during the mounting process.

Moreover, through a proper adjustment during the design in shape and size of each member of the entire head loading and unloading device, the center of gravity of the head loading and unloading device is within and perpendicular to the underside B1.

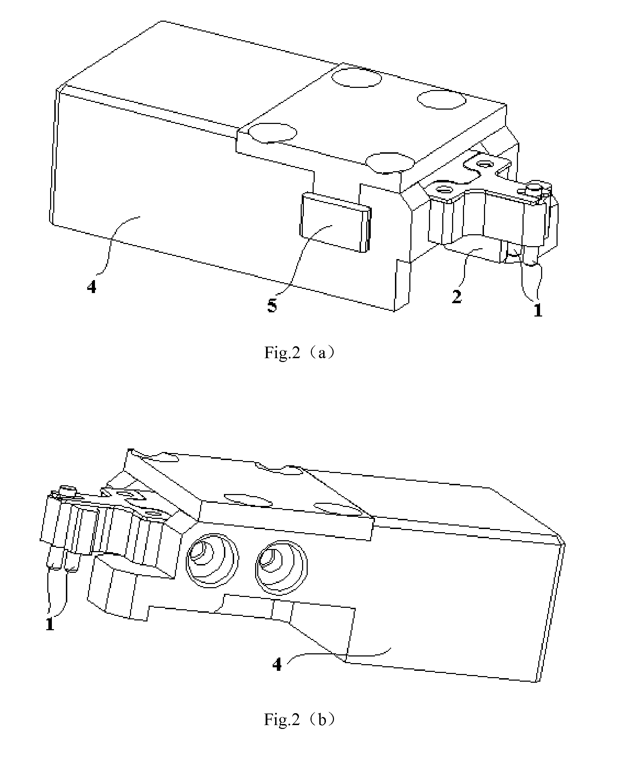

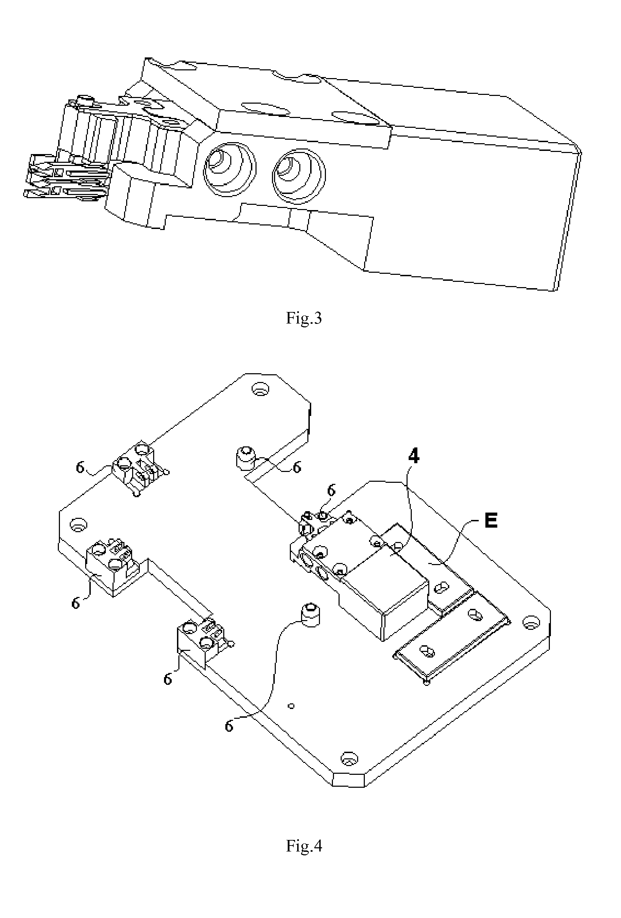

The specific work process is as below: When the head loading and unloading device is to be mounted on the baseplate, first the head loading and unloading device is fixed onto the holding of the head loading and unloading device. As shown in Figure 2, the holding of the head loading and unloading device includes two positioning pins 1 s, a pressing member 2, a strip holding member 4 and a pushing pin 5. The holding member 4 is rectangular, and has a smooth side edge. The two positioning pins 1s are fixed on an end of the holding member 4, with their positions adapted to the positions of the two through holes D2s in the head loading and unloading device to be held. The pressing member 2 can be telescopic under the control of the pushing pin 5 and an internal spring. The pushing pin 5 is positioned inside a strip hole in the side wall of the holding member 4, and can move back and forth along the extension direction of the strip hole. The process for holding the head loading and unloading device is as below: Pull backward the pushing pin 5 protruding from the side wall of the holding member 4, compress the internal spring, pull apart the head end of the pressing member 2 and the positioning pin 1, then insert the underside B of the two through holes D2s facing outward into the two positioning pins 1 s on the holding device of the head loading and unloading device, release the pushing pin 5, and the pressing member 2 elastically holds the head loading and unloading device tightly under the push of the interior spring, as shown in Figure 3.

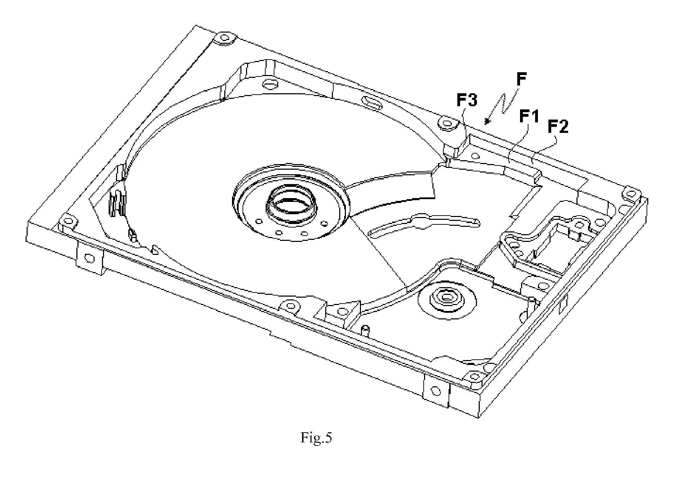

Then place the baseplate to be mounted onto the fixture seat of the hard disk drive, which is a limit space enclosed by six limit members and can fix the hard disk drive to be mounted. The fixing seat is further provided with a guide wall E, and the smooth side edge of the holding member 4 can glide along this guide wall E and send the head loading and unloading device into a specified position, as shown in Figure 4. The structure of the baseplate is as shown in Figure 5, where the head loading and unloading device needs to be mounted in a zone F at the inner side of the base. This zone provides three faces F 1, F2 and F3 for the head loading and unloading device positioning: The head loading and unloading device underside B1 needs to be jointed to the terrace F1, the convex strip B21 and the convex block B22 on the long side face B2 need to be jointed to the side face F2 of the zone F, and the convex block B31 on the short side face B3 needs to be jointed to another side face F3 of the zone F.

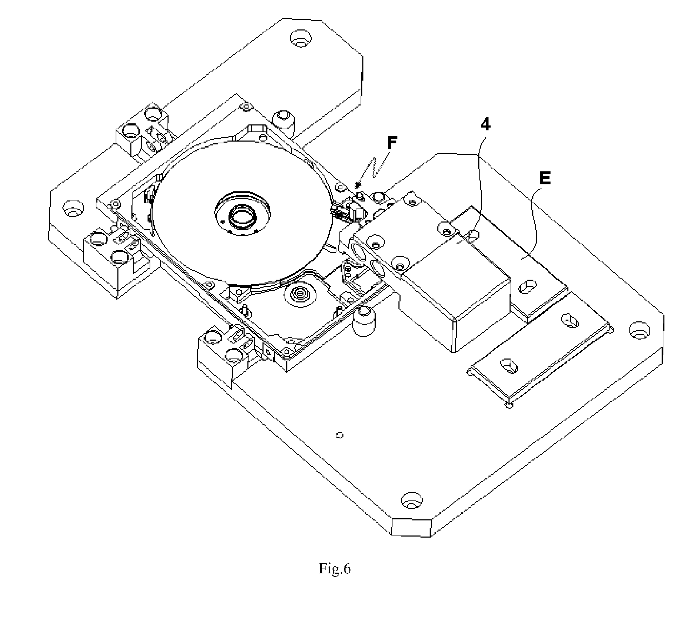

The mounting process of the head loading and unloading device is as shown in Figure 6: Put the holding device holding the head loading and unloading device onto the base where the hard disk drive to be mounted is fixed, make the smooth side edge of the holding member 4 jointed closely to the guide wall E on the base, move the holding member 4 along the guide wall E to make the head loading and unloading device enter the zone F in the base, and joint the underside B1 of the head loading and unloading device to the terrace F1 to complete "landing" of the head loading and unloading device. A good stability can be obtained because of application of the face contact; and because here the center of gravity of the head loading and unloading device is within the underside B1, even if such a situation as a loose holding exists, the head loading and unloading device can still remain to be jointed to the terrace F1 of the baseplate by the gravity of its own, which further improves the mounting stability. After landing of the head loading and unloading device, make the head loading and unloading device glide forward along the side face F2 of the zone F, until the convex block B31 on the short side face B3 contacts another side face F3 of the zone F. Here the head loading and unloading device is basically in place, but generally still needs a fine adjustment. Move the holding member 4 lightly, and make the head loading and unloading device perform adaptive adjustment under the action of the pressing member 2 subject to the internal compression spring, so as to apply a force onto each of the bulging positioning points sufficiently to make them jointed closely to the corresponding positioning surface. Because the convex strip B21 on the long side face B2 of the head loading and unloading device runs through the entire side face, the head loading and unloading device will not shift due to inclining when it is pushed by a lateral force. After every positioning structure is jointed accurately to the corresponding positioning face, the head loading and unloading device is fixed with a screw through the screw hole D1, and then the fixture can be released to get the mounting finished.

## Claims

1. A hard disk drive head loading and unloading device, comprising:
a working division and a positioning division, which are fixedly connected or integrated as a whole, the former being provided with a slide rail on which a magnetic head can move, the latter a structure for mounting and positioning;
wherein the positioning division has an underside and two side faces, the underside being flat, the side faces having positioning bulges protruding from their surfaces, respectively; and the underside and the positioning bulges constitute a positioning structure of the head loading and unloading device.

2. The hard disk drive head loading and unloading device according to claim 1, wherein the two side faces are perpendicular to the underside, one of them with a longer intersection line with the underside having two positioning bulges along the direction of the intersection line, the other one positioning bulge.

3. The hard disk drive head loading and unloading device according to claim 2, wherein one of the two positioning bulges located on the same side face has a strip form, and extends along a direction perpendicular to the underside; and the other two positioning bulges have a lump form, whose dimensions are smaller than 1/3 of the length of the strip positioning bulge.

4. The hard disk drive head loading and unloading device according to claim 3, wherein the strip positioning bulge runs through the side face it belongs to along its length direction.

5. The hard disk drive head loading and unloading device according to claim 3 or 4, wherein the width of the strip positioning bulge is smaller than 1/3 of its length.

6. The hard disk drive head loading and unloading device according to any of claims 1 to 4, wherein the center of gravity of the head loading and unloading device is within and perpendicular to the underside.
